# EUROPEAN PATENT APPLICATION

(11) **EP 3 473 412 A1**
(43) Date of publication of application: **24.04.2019**
(21) Application number: 17197627.7
(22) Date of filing: 20.10.2017
(51) Int. Cl.: B29C 64/386, B33Y 30/00, B33Y 50/00, B29C 64/393, B29C 64/214, B29C 64/205, B29C 64/245

(54) **APPARATUS AND METHOD FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Braunroth, Domenik, 96465 Neustadt bei Coburg (DE)
(74) Representative: Hafner & Kohl

(57) **Abstract**

Apparatus (1) for additively manufacturing of three-dimensional objects (2) by means of successive layerwise selective irradiation and consolidation of layers of build material (3) which can be consolidated by means of an energy beam (4), the apparatus (1) comprising:
- at least one build plate (5), the build plate (5) being moveably supported in at least one degree of freedom of motion; and/or
- at least one build material application element (7, 7a, 7b), particularly a coating element, the build material application element (7, 7a, 7b) being moveably supported;
- at least one optical device (16), the optical device (16) being adapted to optically determine the orientation and/or position of the build plate (5) and/or the build material application element (7, 7a, 7b) relative to a reference plane (RP).

## Description

The invention relates to an apparatus for additively manufacturing three-dimensional objects by means of successive layerwise selective irradiation and consolidation of layers of build material which can be consolidated by means of an energy beam.

Respective apparatuses for additively manufacturing three-dimensional objects, e.g. technical components, are widely known and can be embodied as selective laser sintering apparatuses, selective laser melting apparatuses or selective electron beam melting apparatuses, for instance.

Respective apparatuses comprise a number of functional devices which need to undergo a calibrating process. Examples of respective functional devices are a build plate being moveably supported in at least one degree of freedom of motion, and a build material application element, particularly a coating element such as a coating blade, being moveably supported in at least one degree of freedom of motion. Thereby, the exact orientation and/or position of the build plate relative to the build material application element is important for the quality of the application of build material layers which are to be selectively irradiated and thereby, selectively consolidated during operation of the apparatus and thus, for the entire additive manufacturing process. The orientation and/or position of the build plate relative to the build material application element needs to be exactly adjusted and determined, respectively so as to assure desired build material layers which are to be selectively irradiated and thereby, selectively consolidated during operation of the apparatus.

Adjusting and determining, respectively of the orientation and/or position of the build plate relative to the build material application element, e.g. a coating element such as a coating blade, is regularly performed manually and thus, a cumbersome time-consuming inefficient process.

It is the object of the invention to provide an apparatus for additively manufacturing three-dimensional objects allowing for an improved particularly more efficient, adjustment and determination of the orientation and/or position of the build plate relative to the build material application element.

This object is achieved by an apparatus for additively manufacturing three-dimensional objects according to Claim 1. The claims depending on Claim 1 relate to possible embodiments of the apparatus according to Claim 1.

The apparatus described herein is an apparatus for additively manufacturing three-dimensional objects, e.g. technical components, by means of successive layerwise selective irradiation and consolidation of layers of build material which can be consolidated by means of an energy beam. A respective build material can be a powdered build material; a powdered build material may comprise at least one of a metal powder, a ceramic powder, or a polymer powder, for instance. A respective energy beam can be a laser beam or an electronic beam, for instance. A respective apparatus can be a selective laser sintering apparatus, a selective laser melting apparatus, or a selective electron beam melting apparatus, for instance.

The apparatus comprises a number of functional devices which are operable during its operation. Each functional device may comprise a number of functional elements.

A first exemplary functional device is a build plate on which the actual additive build-up of three-dimensional objects takes place during operation of the apparatus. The build plate may define the spatial extension of a build plane in which build material layers, which build material layers are successively selectively irradiated and consolidated during operation of the apparatus, are successively applied.

A further exemplary functional device is a build material application device, e.g. a coating device, adapted to successively apply layers of build material which are to be successively selectively irradiated and consolidated during operation of the apparatus in the build plane of the apparatus, the build material application device comprising at least one build material application element. The build material application element may be built as or comprise a coating element, e.g. a coating blade. Hence, the build material application device may be built as a coating device, comprising at least a first build material application element being built as a coating element, particularly a coating blade, or comprising a coating element, particularly a coating blade, and a second build material application element being built as a coating element, particularly a coating blade, or comprising a coating element, particularly a coating blade. Yet, other embodiments of the build material application device and respective build material application elements are conceivable; as such, a build material application element may be built as or comprise a build material containment having at least one, particularly gate-like, opening through which build material may exit the containment so as to apply a specific amount of build material in a build plane of a respective apparatus; the at least one opening being controllably closable by at least closing element.

Another functional device is an irradiation device adapted to successively selectively irradiate and consolidate respective layers of build material applied in the build plane with at least one energy beam, e.g. an electron beam or a laser beam, the irradiation device comprising at least one beam generating element adapted to emit the at least one energy beam.

The build plate is moveably supported in at least one degree of freedom of motion. The build plate can be moveably supported along a translational axis. The translational axis can be vertically oriented. Thus, (the) at least one degree of freedom of motion of the build plate can be a translational movement along a translational axis which is vertically oriented. Motions of the build plate can be implemented by disposing the build plate on a, typically plate-like, carrying element of a carrying device. The carrying element is moveable in the respective degree(s) of freedom of motion by means of at least one drive unit, e.g. a linear drive unit, in particular a linear motor, adapted to generate a drive force which acts on the carrying element and the build plate, respectively so as to move the carrying element and the build plate in the respective degree(s) of freedom of motion. At least one motion and/or position determination device, e.g. a motion and/or position encoder, can be associated with the carrying element and the build plate, respectively so as to qualitatively and/or quantitatively determine a (current) motion and/or position of the carrying element and the build plate, respectively. The same applies for each build plate in case that the apparatus comprises a plurality of build plates.

Likewise, the build material application element, e.g. the coating element or coating blade, is moveably supported in at least one degree of freedom of motion. The build material application element is particularly, moveably supported in at least two (different) degrees of freedom of motion. The build material application element can be moveably supported along a first translational axis and along a second translational axis. The first translational axis can be horizontally oriented. The second translation axis can be vertically oriented. Thus, a first degree of freedom of motion of the build material application element can be a translational movement along a first translational axis which is vertically oriented and a second degree of freedom of motion of the build material application element can be a translational movement along a second translational axis which is horizontally oriented. Motions of the build material application element in the two different translational axes can be independent of each other. The build material application element is moveable in the respective degree(s) of freedom of motion by means of at least one drive unit, e.g. a linear drive unit, in particular a linear motor, adapted to generate a drive force which acts on the build material application element so as to move the build material application element in the respective degree(s) of freedom of motion. At least one motion and/or position determination device, e.g. a motion and/or position encoder, can be associated with the build material application element so as to qualitatively and/or quantitatively determine a motion and/or position of the build material application element. The same applies for each build material application element in case that the apparatus comprises a plurality of build material application elements.

The direction of motion of the build plate can be opposite to the direction of motion of the build material application element. Thus, at least one axis of motion along which the build plate can be moved can be coinciding or parallel, respectively with at least one axis of motion along which the build material application element can be moved.

The apparatus typically comprises a hard- and/or software embodied control device adapted to control motions of the build plate and/or the build material application element relative to each other and particularly, relative to a measurement plane which will be explained below in more detail. The control device is thus, typically associated with respective drive units associated with the build plate and the build material application element, respectively so as to control motions of the build plate and/or the build material application element relative to each other and particularly, relative to the measurement plane.

As explained above, an exact orientation and/or position of the build plate relative to the build material application element (and vice versa) is important for the quality of the application of build material layers which are to be selectively irradiated and consolidated during operation of the apparatus and thus, for the entire additive manufacturing process. In order to achieve an exact determination of the orientation and/or position of the build plate relative to the build material application element (and vice versa), the apparatus comprises at least one optical device, the optical device is adapted to optically determine, respectively the orientation and/or position of the build plate and/or the build material application element relative to a reference plane. By optically detecting or determining the orientation and/or position of the build plate and the build material application element, respectively relative to a reference plane, e.g. the build plane of the apparatus, also the orientation and/or position of the build plate relative to the build material application element (and vice versa) can be exactly adjusted and determined, respectively.

The reference plane can be a horizontal plane. As such, the reference plane can be the plane of a bottom wall, a top wall, etc. of a process chamber of the apparatus, for instance. In particular, the reference plane can be or comprise the build plane of the apparatus.

The optical device is particularly, adapted to automatically, in particular fully automatically, determine, respectively the orientation and/or position of the build plate and/or the build material application element relative to the reference plane so that no service personnel is required for manually adjusting and determining, respectively of the orientation and/or position of the build plate relative to the build material application element. A respective detection or determination of the orientation and/or position of the build plate and/or the build material application element relative to the reference plane by means of the optical device is typically performed in a calibrating mode of the apparatus. A respective calibrating mode of the apparatus can be implemented before an actual additive build-up of three-dimensional objects takes place in a (subsequent) build mode of the apparatus. In either case, adjusting and determining, respectively of the orientation and/or position of the build plate relative to the build material application element can be achieved in highly efficient manner.

The optical device can be adapted to emit at least one measurement beam. The optical device can therefore, comprise at least one measurement beam emitting unit being adapted to emit at least one measurement beam. The measurement beam may at least partly extend through a/the process chamber of the apparatus, thereby defining a measurement plane. The measurement plane is the plane in which the measurement beam extends. The measurement beam can be a horizontal beam, the measurement plane can thus, be a horizontal plane. Hence, the measurement beam and the measurement plane, respectively may extend parallel to the reference plane or the build plane, respectively and thus, have a defined spatial relationship, i.e. particularly a defined (vertical) distance, to the reference plane or the build plane, respectively. The measurement beam and the measurement plane, respectively typically extend above the build plane and thus, have a defined (vertical) distance relative to the build plane.

The optical device may also be adapted to emit at least two (separate) measurement beams. The optical device can therefore, comprise a (single) measurement beam emitting unit being adapted to emit the at least two measurement beams, or can comprise at least two (separate) measurement beam emitting units each being adapted to emit at least one measurement beam. The at least two (separate) measurement beam emitting units may be arranged opposite relative to each other. In either case, the at least two measurement beams may be emitted simultaneously or not-simultaneously. Each of the at least two measurement beams may at least partly extend through a/the process chamber of the apparatus, thereby defining a/the measurement plane; the measurement plane is the plane in which the measurement beams extend. The measurement beams can be parallel beams. The measurement beams can be (parallel) horizontal beams, the measurement plane can thus, be a horizontal plane. Hence, the measurement beams and the measurement plane, respectively may extend parallel to the reference plane or the build plane, respectively and thus, have a defined spatial relationship, i.e. particularly a defined (vertical) distance, relative to the reference plane or the build plane, respectively. The measurement beams and the measurement plane, respectively typically extend above the build plane and thus, have a defined (vertical) distance relative to the build plane.

As mentioned before, the optical device may comprise at least one measurement beam emitting unit adapted to emit the at least one measurement beam or the at least two measurement beams, respectively. Suitable optical elements, e.g. lenses, can be associated with the measurement beam emitting unit(s) in order to emit measurement beams of desired beam properties.

Having exited the measurement beam emitting unit, a measurement beam can be received at least one measurement beam receiving unit adapted to receive at least one measurement beam emitted from at least one measurement beam emitting unit or reflected back towards the measurement beam emitting unit by at least one measurement beam reflecting unit. Hence, the optical device may comprise at least one measurement beam receiving unit adapted to receive at least one measurement beam emitted from at least one measurement beam emitting unit or at least one at least one measurement beam reflecting unit adapted to reflect at least one measurement beam emitted from at least one measurement beam emitting unit back towards the measurement beam emitting unit.

In the first case, the emitted measurement beam may be received by the measurement beam receiving unit when travelling undisturbed between the measurement beam emitting unit and the measurement beam receiving unit. The measurement beam receiving unit may comprise at least one measurement beam receiving element, e.g. an optical sensor element, in particular a diode element, by which a measurement beam can be received. The measurement beam receiving unit is typically arranged (directly) opposite the measurement beam emitting unit. The distance between the measurement beam emitting unit and the measurement beam receiving unit is typically known. Also, the time interval the (undisturbed) measurement beam travels between the measurement beam emitting unit and the measurement beam receiving unit is typically known. Reception of a measurement beam by the measurement beam receiving unit is possible as long as the measurement beam travels undisturbed between the measurement beam emitting unit and the measurement beam receiving unit. As soon as an item is moved in the measurement plane, reception of the measurement beam by the measurement beam receiving unit is interrupted. Thus, an interruption of the reception of the measurement beam by the measurement beam receiving unit indicates that an item, e.g. the build plate or a build material application element, is moved in the measurement plane. The same applies to the embodiment in which the optical device is adapted to emit at least two (separate) measurement beams in analogous manner.

In the second case, the reflected measurement beam travels twice the distance between the point at which it exits the measurement beam emitting unit and the point at which it is reflected back towards the measurement beam emitting unit. Back reflection of the measurement beam may take place at a respective measurement beam reflecting unit. The measurement beam reflecting unit may comprise at least one measurement beam reflecting element, e.g. a mirror element, at which a measurement beam can be reflected back towards the measurement beam emitting unit. The measurement beam reflecting unit is typically arranged (directly) opposite the measurement beam emitting unit. The distance between the measurement beam emitting unit and the measurement beam reflecting unit is typically known. Also, the time interval the (undisturbed) measurement beam travels between the measurement beam emitting unit and the measurement beam reflecting unit as well as the time interval the (undisturbed) reflected measurement beam travels between the measurement beam reflecting unit and the measurement beam emitting unit, respectively is typically known. The time interval the (undisturbed) measurement beam travels between the measurement beam emitting unit and the measurement beam reflecting unit and the time interval the (undisturbed) reflected measurement beam travels between the measurement beam reflecting unit and the measurement beam emitting unit, respectively can be stored as a reference time interval. The same applies to the embodiment in which the optical device is adapted to emit at least two (separate) measurement beams in analogous manner.

In either case, a respective measurement beam can be a laser beam, for instance. Thus, a respective measurement beam emitting unit can be built as a laser emitting unit or may comprise at least one laser emitting unit.

As mentioned before, the measurement plane can be parallel to the reference plane or the build plane and thus, can have a parallel arrangement relative to the reference plane or the build plane, respectively. Yet, it is generally also possible that the measurement plane can be angled or inclined to the reference plane or the build plane and thus, can have an angled or inclined arrangement relative to the reference plane or the build plane, respectively.

The optical device may comprise at least one measurement beam detecting unit adapted to detect a received measurement beam, i.e. a measurement beam which was received by the measurement beam receiving unit, or a reflected measurement beam, i.e. a measurement beam being reflected back towards the measurement beam emitting unit. The measurement beam detecting unit can be built as or comprise at least one measurement beam detecting element (as mentioned in context with the measurement beam receiving unit, for instance), e.g. an optical sensor, in particular a sensor diode, adapted to detect a (reflected) measurement beam. The measurement beam detecting unit can be used for determining the time interval the (undisturbed) measurement beam travels between the measurement beam emitting unit and the measurement beam reflecting unit and the time interval the (undisturbed) reflected measurement beam travels between the measurement beam reflecting unit and the measurement beam emitting unit and thus, for determining a respective reference time interval. The measurement beam detecting unit may be provided with the measurement beam receiving unit, i.e. the measurement beam receiving unit and the measurement beam detecting unit may form an integral functional unit at least for receiving measurement beams and detecting received measurement beams, or may be provided with the measurement beam emitting unit, i.e. the measurement beam emitting unit and the measurement beam detecting unit may form an integral functional unit at least for emitting measurement beams and detecting reflected measurement beams.

The optical device may further comprise at least one measurement beam travel determining unit adapted to determine the time interval a measurement beam has travelled between the point of time at which it was emitted by the measurement beam emitting unit and the point of time the (reflected) measurement beam is detected by the measurement beam detecting unit. The measurement beam travel determining unit may be provided with the measurement beam receiving unit, i.e. they may form an integral functional unit at least for emitting measurement beams and determining the time interval a measurement beam has travelled between the point of time at which it was emitted by the measurement beam emitting unit and the point of time the (received) measurement beam is detected by the measurement beam detecting unit, or may be provided with the measurement beam emitting unit, i.e. they may form an integral functional unit at least for emitting measurement beams and determining the time interval a measurement beam has travelled between the point of time at which it was emitted by the measurement beam emitting unit and the point of time the (reflected) measurement beam is detected by the reflected measurement beam detecting unit.

Based on the determination results of the measurement beam travel determining unit, i.e. particularly based on a comparison of a determined time interval with a respective reference time interval, the optical device may determine if a measurement beam was reflected at the measurement beam reflecting unit or at another item at which the measurement beam can be reflected. Another item at which the measurement beam can be reflected can be the build plate or a build material application element which was moved into the measurement plane; i.e. the measurement beam can be reflected at the build plate or a build material application element, in particular at an (outer) edge of the build plate or the build material application element, respectively when the build plate or the build material application element is moved into the measurement plane. Typically, the time interval for the case in which the measurement beam is reflected at another item, i.e. particularly at the build plate or build material application element, is lower compared with the time interval for the case in which the measurement beam is reflected by the measurement beam reflecting unit so that it can be exactly detected when an item is moved into the measurement plane.

The results of the measurement beam detecting unit, particularly the results of the measurement beam travel determining unit, thus, allow for the detection of a motion of the build plate and/or the build material application element into the measurement plane which is of use for adjusting and determining, respectively the orientation and/or position of the build plate relative to the build material application element (and vice versa). The detection of a motion of the build plate or the build material application element, respectively into the measurement plane may trigger a detection of the position of the build plate and the build material application element by means of respective motion and/or position determination device, e.g. a motion and/or position encoder, associated with the build plate or the build material application element, respectively so that the exact position of the build plate or the build material application element, respectively when the build plate or the build material application element, respectively is moved into the measurement plane can be determined. The determined position of the build plate or the build material application element, respectively when the build plate or the build material application element, respectively is moved into the measurement plane can be (temporarily) stored in a data storage device and used for adjusting and determining, respectively the orientation and/or position of the build plate relative to the build material application element (and vice versa), i.e. for calibrating purposes of the build plate or the build material application element, respectively.

It was mentioned above that the apparatus typically comprises a control device adapted to control motions of the build plate and/or the build material application element(s), particularly, relative to the measurement plane. The control device can be adapted to implement a calibrating mode for, in particular automatically, calibrating a reference position, in particular a zero position, of the build plate and/or the build material application element(s), whereby the calibrating mode comprises performing a specific order of motion of the build plate and/or the build material application element(s) relative to the measurement plane, whereby the reference position of the build plate and/or the build material application element(s) is determined as the position of the build plate or the build material application element(s), respectively at which the build plate or the build material application element(s), respectively is/are moved into the measurement plane, particularly relative to an initial position, so that a measurement beam may be reflected at the build plate or the build material application element(s), for instance. A respective calibrating mode may implement the following exemplary order of motion of the build plate and the build material application element(s), respectively:
Emanating from a defined initial position, e.g. a position below the measurement plane, the build plate may be moved towards the measurement plane. Once it is detected that the build plate is moved into the measurement plane, which detection may be based on the detection of an interrupt of reception of the measurement beam by the measurement beam receiving unit or on the detection of reflections of a measurement beam at the build plate, the position of the build plate, particularly relative to the initial position, may be determined. This determined position can be defined as a reference position, in particular a zero position, of the build plate and stored in a data storage unit. If two or more measurement beams are provided, the process may be performed with each measurement beam separately.

Next, also emanating from a defined initial position, e.g. a position above the measurement plane, the build material application element may be moved towards the measurement plane. Once it is detected that the build material application element is moved into the measurement plane, which detection may be based on the detection of an interrupt of reception of the measurement beam by the measurement beam receiving unit or on the detection of reflections of a measurement beam at the build material application element, the position of the build material application element, particularly relative to the initial position, may be determined. This determined position can be defined as a reference position, in particular a zero position, of the build material application element and stored in a data storage unit. If two or more build material application elements are provided, the process may be performed with each measurement beam separately. If two or more measurement beams are provided, the process may be performed with each measurement beam separately.

Of course, the order or motion(s) of the build plate and the build material application element(s) may be changed in arbitrary manner.

The invention further relates to an optical device for an apparatus for additively manufacturing three-dimensional objects, particularly an apparatus as specified above. The optical device is adapted to optically detect the orientation and/or position of a build plate and/or a build material application element relative to a reference plane.

All annotations relating to the apparatus apply to the optical device in analogous manner.

Furthermore, the invention relates to a method for optically determining a reference position, in particular a zero position, of at least one build plate, the build plate being moveably supported in at least one degree of freedom of motion, and/or at least one build material application element, the build material application element being moveably supported in at least one degree of freedom of motion, of an apparatus for additively manufacturing three-dimensional objects. Thereby, an optical device as specified above is used for performing the method. The method may also be deemed as a method for calibrating the position of a build plate and/or build material application element, respectively.

The method may comprise performing a specific order of motion of the build plate and/or build material application element relative to a measurement plane, whereby the reference position of the build plate and/or the build material application element is determined/defined as the position of the build plate or the build material application element, respectively at which the build plate or the build material application element, respectively is moved into the measurement plane, particularly relative to an initial position, so that a measurement beam may be reflected at the build plate or the build material application element, for instance.

All annotations relating to the apparatus also apply to the method in analogous manner.

Exemplary embodiments of the invention are described with reference to the Fig., whereby:
- Fig. 1: shows a principle drawing of an apparatus for additively manufacturing three-dimensional objects according to an exemplary embodiment; and
- Fig. 2 - 9: show each an enlarged view of an optical device of the apparatus according to an exemplary embodiment during different stages of a calibrating mode of the apparatus.

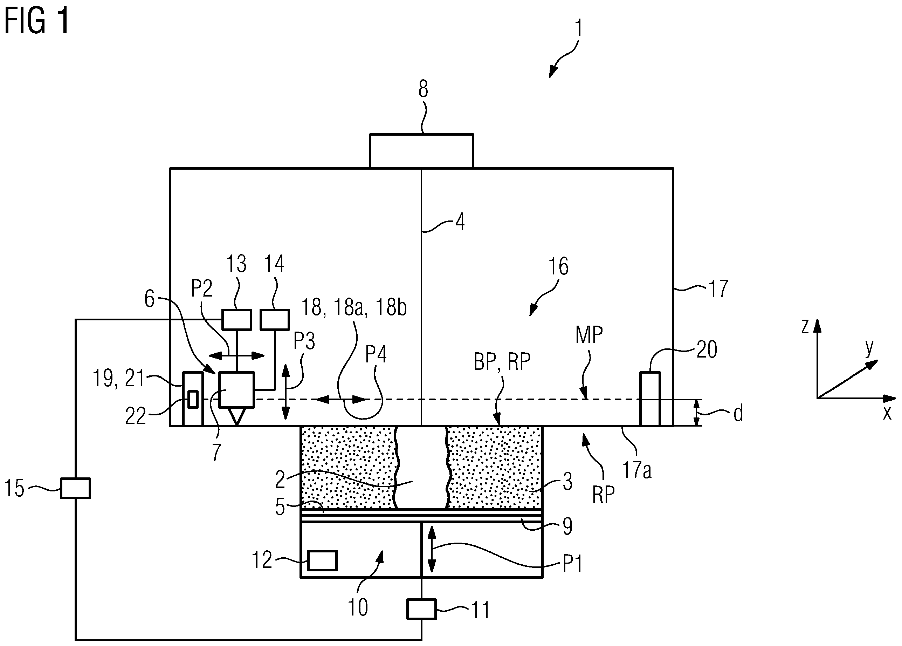

Fig. 1 shows a principle drawing of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4 according to an exemplary embodiment. The apparatus 1 can be a selective laser melting apparatus, for instance.

The apparatus 1 comprises a number of functional devices which are operable during its operation. Each functional device may comprise a number of functional units. Operation of the functional devices and the apparatus 1, respectively is controlled by a central control device (not depicted).

A first exemplary functional device is a build plate 5 on which the actual additive build-up of the three-dimensional object 2 takes place during operation of the apparatus 1. The build plate 5 may define the spatial extension of a build plane BP in which build material layers, which build material layers are successively selectively irradiated and consolidated during operation of the apparatus 1, are successively applied. A further exemplary functional device is a build material application device, i.e. a coating device 6, adapted to successively apply layers of build material 3 which are to be successively selectively irradiated and consolidated during operation of the apparatus 1 in the build plane BP, the build material application device 6 comprises a build material application element 7, 7a, 7b, particularly a coating element such as a coating blade, for instance. Another functional device is an irradiation device 8 adapted to successively selectively irradiate and consolidate respective layers of build material 3 applied in the build plane BP with the at least one energy beam 4, the irradiation device 8 comprises at least one beam generating element (not explicitly shown) adapted to emit the at least one energy beam 4.

The build plate 5 is moveably supported in at least one degree of freedom. According to the exemplary embodiments given in the Fig., the build plate 5 is moveably supported along a vertically oriented translational axis (indicated by double-arrow P1). According to the exemplary embodiments given in the Fig., motions of the build plate 5 are implemented by disposing the build plate 5 on a typically plate-like carrying element 9 of a carrying device 10. The carrying element 9 is moveable in the respective degree of freedom of motion by means of a drive unit 11, e.g. a linear drive unit, in particular a linear motor, adapted to generate a drive force which acts on the carrying element 9 and the build plate 5, respectively so as to move the carrying element 9 and the build plate 5 in the respective degree of freedom of motion. At motion and/or position determination device 12, e.g. a motion and/or position encoder, is associated with the carrying element 9 and the build plate 5, respectively so as to qualitatively and/or quantitatively determine a (current) motion and/or position of the carrying element 9 and the build plate 5, respectively.

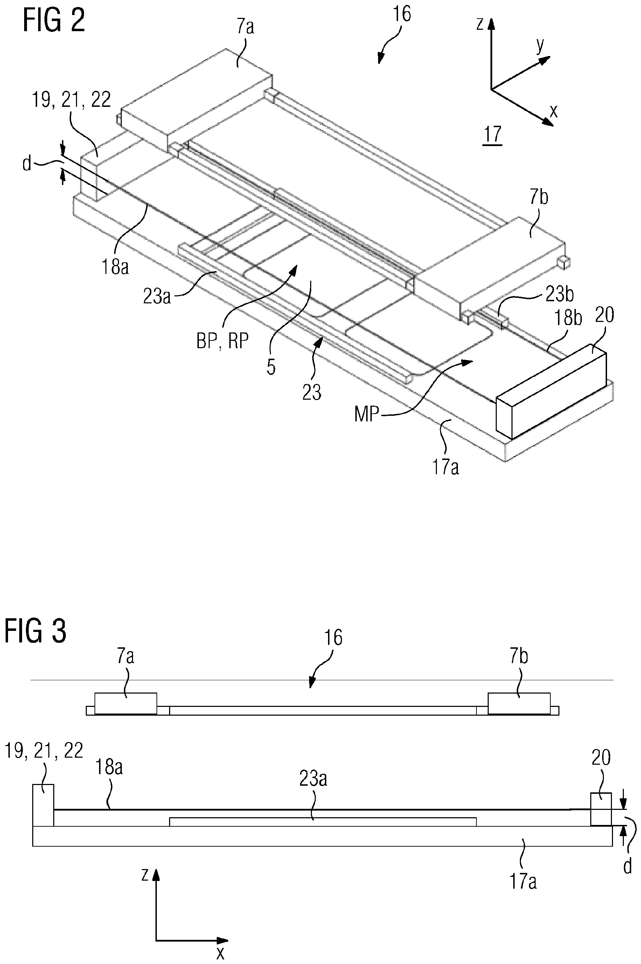

The build material application element 7, 7a, 7b is moveably supported in at least two degrees of freedom of motion. According to the exemplary embodiments given in the Fig, the build material application element 7, 7a, 7b is moveably supported along a horizontally oriented first translational axis (indicated by double-arrow P2) and along a vertically oriented second translational axis (indicated by double-arrow P3). Motions of the build material application element 7, 7a, 7b in the two different translational axes can be independent of each other. The build material application element 7, 7a, 7b is moveable in the respective degrees of freedom of motion by means of a drive unit 13, e.g. a linear drive unit, in particular a linear motor, adapted to generate a drive force which acts on the build material application element 7, 7a, 7b so as to move the build material application element 7, 7a, 7b in the respective degrees of freedom of motion. A motion and/or position determination device 14, e.g. a motion and/or position encoder, is associated with the build material application element 7, 7a, 7b so as to qualitatively and/or quantitatively determine a motion and/or position of the build material application element 7, 7a, 7b. The same applies for each build material application element 7a, 7b in exemplary case that the apparatus 1 comprises a plurality of build material application elements 7a, 7b (see Fig. 2 - 9).

As is discernible e.g. from Fig. 1, the direction of motion of the build plate 5 can be opposite to the direction of motion of the build material application element 7, 7a, 7b; this particularly, applies to the case in which the build plate 5 is moved vertically upwards and the build material application element 7, 7a, 7b is moved vertically downwards.

The apparatus 1 comprises a hard- and/or software embodied control device 15 adapted to control motions of the build plate 5 and/or the build material application element 7, 7a, 7b relative to each other and particularly, relative to a measurement plane MP. The control device 15 is thus associated with respective drive units 11, 13 associated with the build plate 5 and the build material application element 7, 7a, 7b, respectively so as to control motions of the build plate 5 and/or the build material application element 7, 7a, 7b relative to each other and particularly, relative to the measurement plane MP.

An exact orientation and/or position of the build plate 5 relative to the build material application element 7, 7a, 7b (and vice versa) is important for the quality of the application of build material layers which are to be selectively irradiated and consolidated during operation of the apparatus 1 and thus, for the entire additive manufacturing process. In order to achieve an exact determination of the orientation and/or position of the build plate 5 relative to the build material application element 7, 7a, 7b (and vice versa), the apparatus 1 comprises an optical device 16, the optical device 16 is adapted to optically determine, respectively the orientation and/or position of the build plate 5 and/or the build material application element 7, 7a, 7b relative to a reference plane RP. By optically detecting or determining the orientation and/or position of the build plate 5 and the build material application element 7, 7a, 7b, respectively relative to a reference plane RP also the orientation and/or position of the build plate 5 relative to the build material application element 7, 7a, 7b (and vice versa) can be exactly adjusted and determined, respectively.

As is clear from the Fig. the reference plane RP can be a horizontal plane. As such, the reference plane RP can be the plane of a bottom wall, a top wall, etc. of a process chamber 17 - the bottom wall of the process chamber 17 is explicitly provided with reference numeral 17a - of the apparatus 1, for instance. As indicated in Fig. 1, the reference plane RP can also be or comprise the build plane BP.

The optical device 16 is adapted to automatically, in particular fully automatically, detect or determine, respectively the orientation and/or position of the build plate 5 and/or the build material application element 7, 7a, 7b relative to the reference plane RP so that no service personnel is required for manually adjusting and determining, respectively the orientation and/or position of the build plate 5 relative to the build material application element 7, 7a, 7b. The detection or determination of the orientation and/or position of the build plate 5 and/or the build material application element 7, 7a, 7b relative to the reference plane RP by means of the optical device 16 can be performed in a calibrating mode of the apparatus 1 which can be implemented before an actual additive build-up of three-dimensional objects 2 takes place in a (subsequent) build mode of the apparatus 1.

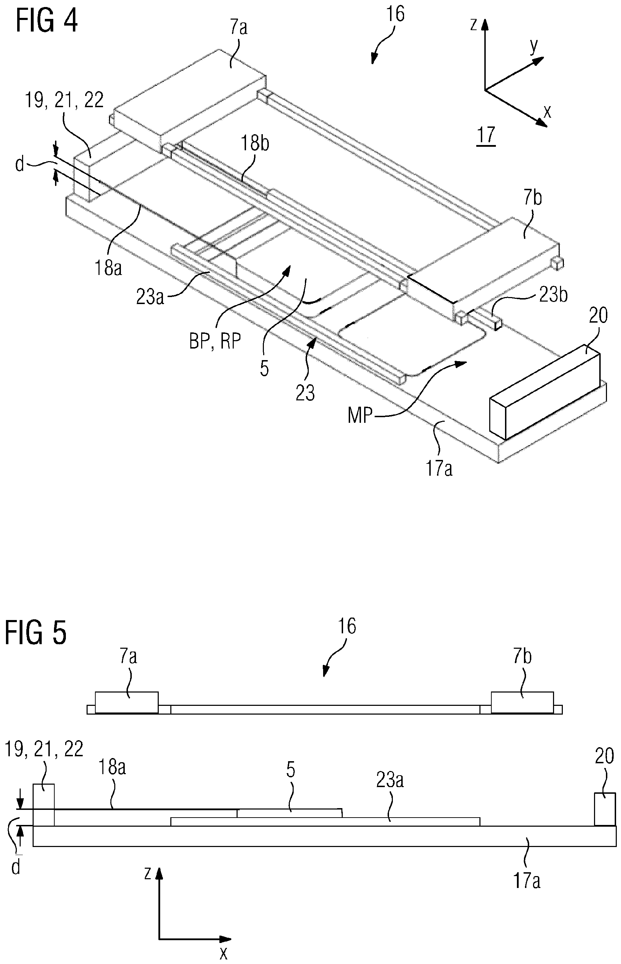

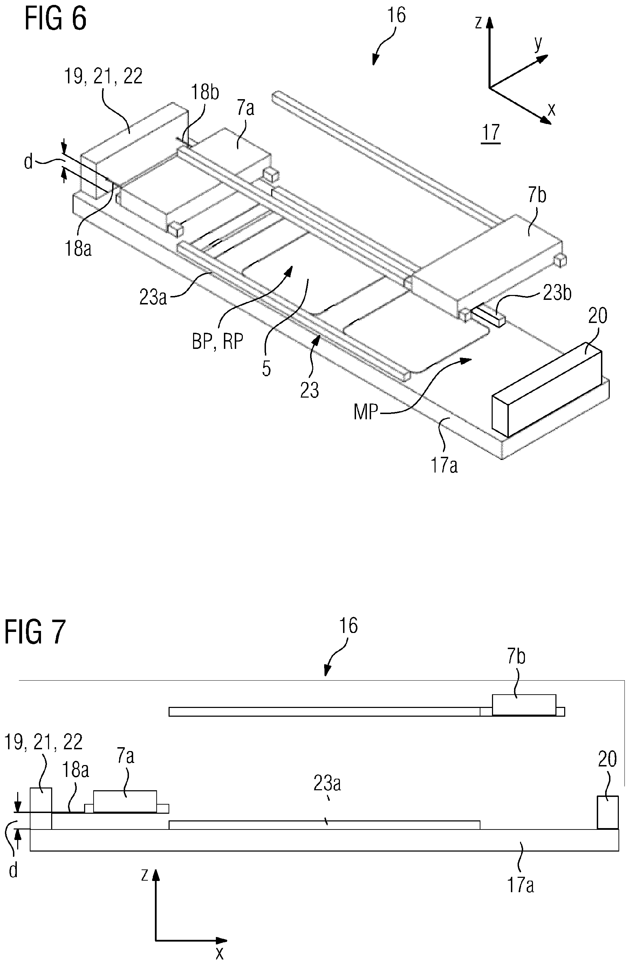

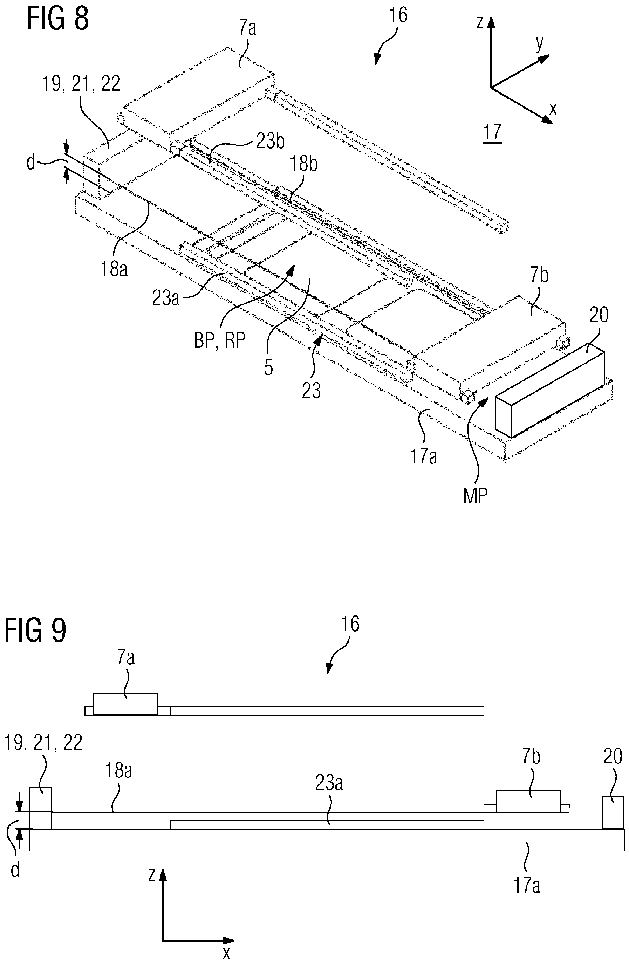

Fig. 2 - 9 show each an enlarged view of an optical device 16 of the apparatus 1 according to an exemplary embodiment during different stages of a calibrating mode of the apparatus 1. Thereby, Fig. 2, 3 - Fig. 2 being a perspective view, Fig. 3 being a corresponding side-view - show a first exemplary stage of the calibrating mode of the apparatus 1, Fig. 4, 5 - Fig. 4 being a perspective view, Fig. 5 being a corresponding side-view - show a second exemplary stage of the calibrating mode of the apparatus 1, Fig. 6, 7, 7a, 7b - Fig. 6 being a perspective view, Fig. 7, 7a, 7b being a corresponding side-view - show a third exemplary stage of the calibrating mode of the apparatus 1; and Fig. 8, 9 - Fig. 8 being a perspective view, Fig. 9 being a corresponding side-view - show a third exemplary stage of the calibrating mode of the apparatus 1.

The optical device 16 can be adapted to emit at least one measurement beam 18. The optical device 16 therefore, comprises at least one measurement beam emitting unit 19 being adapted to emit the at least one measurement beam 18. As is discernible from Fig. 1, the measurement beam 18 extends through the process chamber 17, thereby defining the measurement plane MP. The measurement plane MP is the plane in which the measurement beam 18 extends.

As is discernible from Fig. 2 - 9, the optical device 16 may also be adapted to emit at least two separate measurement beams 18a, 18b. The optical device 16 can therefore, comprise a (single) measurement beam emitting unit 19 being adapted to emit the at least two measurement beams 18a, 18b (see Fig. 2 - 9), or can comprise at least two (separate) measurement beam emitting units 19 each being adapted to emit at least one measurement beam 18a, 18b (not shown). In either case, the at least two measurement beams 18a, 18b may be emitted simultaneously or not-simultaneously. As is discernible from Fig. 2 - 9, each of the at least two measurement beams 18a, 18b extends through the process chamber 17 of the apparatus 1, thereby defining the measurement plane MP. The measurement plane MP is the plane in which the measurement beams 18a, 18b extend.

According to the exemplary embodiments given in the Fig., each measurement beam 18 is a horizontal beam, the measurement plane MP is thus, a horizontal plane. Hence, the measurement beam 18, 18a, 18b and the measurement plane MP, respectively extend parallel to the reference plane RP or the build plane BP, respectively and thus, have a defined spatial relationship, i.e. particularly a defined (vertical) distance, to the reference plane RP or the build plane BP, respectively. According to the exemplary embodiments given in the Fig., the measurement beam(s) 18, 18a, 18b and the measurement plane MP, respectively extend above the build plane BP and thus, have a defined (vertical) distance d relative to the build plane BP.

Even if not shown in the Fig., it is generally also possible that the measurement plane MP can be angled or inclined to the reference plane RP or the build plane BP and thus, can have an angled or inclined arrangement relative to the reference plane RP or the build plane BP, respectively.

As is discernible from the Fig., having exited the measurement beam emitting unit 19, a measurement beam 18, 18a, 18b can be reflected back towards the measurement beam emitting unit 19 (as indicated by double-arrow P4). Thus, a reflected measurement beam 18 travels twice the distance between the point at which it exits the measurement beam emitting unit 19 and the point at which it is reflected back towards the measurement beam emitting unit 19. Back reflection of the measurement beam 18 takes place at a measurement beam reflecting unit 20 of the optical device 16. Thus, the optical device 16 comprises a measurement beam reflecting unit 20. The measurement beam reflecting unit 20 comprises at least one measurement beam reflecting element (not shown), e.g. a mirror element, at which a measurement beam 18 can be reflected back towards the measurement beam emitting unit 19. As is discernible from the Fig., the measurement beam reflecting unit 20 is arranged (directly) opposite the measurement beam emitting unit 19. The distance between the measurement beam emitting unit 19 and the measurement beam reflecting unit 20 is known. Also, the time interval an (undisturbed) measurement beam 18 travels between the measurement beam emitting unit 19 and the measurement beam reflecting unit 20 as well as the time interval an (undisturbed) reflected measurement beam 18 travels between the measurement beam reflecting unit 20 and the measurement beam emitting unit 19, respectively is known. The time interval the (undisturbed) measurement beam 18 travels between the measurement beam emitting unit 19 and the measurement beam reflecting unit 20 and the time interval the (undisturbed) reflected measurement beam 18 travels between the measurement beam reflecting unit 20 and the measurement beam emitting unit 19, respectively can be stored in a data storage unit (not shown) as a reference time interval. The same applies to the exemplary embodiment of Fig. 2 - 9 in which the optical device 16 is adapted to emit at least two (separate) measurement beams 18a, 18b in analogous manner.

As an alternative or addition to the measurement beam reflecting unit 20, the optical device 16 could also comprise a measurement beam receiving unit adapted to receive at least one measurement beam 18, 18a, 18b emitted from at least one measurement beam emitting unit 19. Thus, an emitted measurement beam 18, 18a, 18b may be received by the measurement beam receiving unit when travelling undisturbed between the measurement beam emitting unit 19 and the measurement beam receiving unit. The measurement beam receiving unit may comprise at least one measurement beam receiving element, e.g. an optical sensor element, in particular a diode element, by which a measurement beam 18, 18a, 18b can be received. The measurement beam receiving unit can be arranged (directly) opposite the measurement beam emitting unit 19. The distance between the measurement beam emitting unit 19 and the measurement beam receiving unit is typically known. Also, the time interval the (undisturbed) measurement beam 18, 18a, 18b travels between the measurement beam emitting unit 19 and the measurement beam receiving unit is typically known. Reception of a measurement beam 18, 18a, 18b by the measurement beam receiving unit is possible as long as the measurement beam travels undisturbed between the measurement beam emitting unit 19 and the measurement beam receiving unit. As soon as an item is moved in the measurement plane MP (see e.g. Fig. 4, 5 or Fig. 6, 7, 7a, 7b or Fig. 8, 9), reception of the measurement beam 18, 18a, 18b by the measurement beam receiving unit is interrupted. Thus, an interruption of the reception of the measurement beam 18, 18a, 18b by the measurement beam receiving unit indicates that an item, e.g. the build plate 5 or a build material application element 7a, 7b, is moved in the measurement plane MP.

In either case, a respective measurement beam 18, 18a, 18b can be a laser beam, for instance. Thus, a respective measurement beam emitting unit 19 can be built as a laser emitting unit or may comprise at least one laser emitting unit.

The optical device 16 further comprises a measurement beam detecting unit 21 adapted to detect a received measurement beam 18, 18a, 18b, i.e. a measurement beam 18, 18a, 18b which was received by the measurement beam receiving unit, or a reflected measurement beam 18, 18a, 18b, i.e. a measurement beam 18, 18a, 18b being reflected back towards the measurement beam emitting unit 19. The measurement beam detecting unit 21 can be built as or comprise at least one measurement beam detecting sensor element, e.g. an optical sensor, in particular a sensor diode, adapted to detect a reflected measurement beam 18. The measurement beam detecting unit 21 can be used for determining the time interval the (undisturbed) measurement beam 18 travels between the measurement beam emitting unit 19 and the measurement beam reflecting unit 20 and the time interval the (undisturbed) reflected measurement beam 18 travels between the measurement beam reflecting unit 20 and the measurement beam emitting unit 19 and thus, for determining a respective reference time interval. As is discernible from the Fig., the measurement beam detecting unit 21 may be provided with the measurement beam emitting unit 19, i.e. they may form an integral functional unit for emitting measurement beams 18 and detecting reflected measurement beams 18. Yet, The measurement beam detecting 19 could also be provided with a respective measurement beam receiving unit, i.e. the measurement beam receiving unit and the measurement beam detecting unit 19 could form an integral functional unit at least for receiving measurement beams 18, 18a, 18b and detecting received measurement beams 18, 18a, 18b.

The optical device 16 may further comprise a measurement beam travel determining unit 22 adapted to determine the time interval a measurement beam 18 has travelled between the point of time at which it was emitted by the measurement beam emitting unit 19 and the point of time the (reflected) measurement beam 18 is detected by the reflected measurement beam detecting unit 21. As is discernible from the Fig., the measurement beam travel determining unit 22 may be provided with the measurement beam emitting unit 19, i.e. they may form an integral functional unit for emitting measurement beams 18 and determining the time interval a measurement beam 18 has travelled between the point of time at which it was emitted by the measurement beam emitting unit 19 and the point of time the (reflected) measurement beam 18 is detected by the reflected measurement beam detecting unit 21. Yet, the measurement beam travel determining unit 22 could also be provided with a respective measurement beam receiving unit, i.e. they may form an integral functional unit at least for emitting measurement beams 18, 18a, 18b and determining the time interval a measurement beam 18, 18a, 18b has travelled between the point of time at which it was emitted by the measurement beam emitting unit 19 and the point of time the (received) measurement beam 18, 18a, 18b is detected by the measurement beam detecting unit.

Based on the determination results of the measurement beam travel determining unit 22, i.e. particularly based on a comparison of a determined time interval with a respective reference time interval, the optical device 16 may determine if a measurement beam 18 was reflected at the measurement beam reflecting unit 20 or at another item at which the measurement beam 18 can be reflected. Another item at which the measurement beam 18 can be reflected can be the build plate 5 or a build material application element 7, 7a, 7b which was moved into the measurement plane MP; i.e. a measurement beam 18 can be reflected at the build plate 5 (see Fig. 4, 5) or a build material application element 7, 7a, 7b (see Fig. 6 - 9), in particular at an (outer) edge of the build plate 5 or a build material application element 7, 7a, 7b, respectively when the build plate 5 or a build material application element 7, 7a, 7b is moved into the measurement plane MP. Typically, the time interval for the case in which the measurement beam 18 is reflected at another item, i.e. particularly at the build plate 5 or build material application element 7, 7a, 7b, is lower compared with the time interval for the case in which the measurement beam 18 is reflected by the measurement beam reflecting unit 20 so that it can be exactly detected when an item, i.e. particularly the build plate 5 or build material application element 7, 7a, 7b, is moved into the measurement plane MP.

The results of the measurement beam detecting unit 21, particularly the results of the measurement beam travel determining unit 22, thus, allow for the detection of a motion of the build plate 5 and/or the build material application element 7, 7a, 7b into the measurement plane MP which is of use for adjusting and determining, respectively the orientation and/or position of the build plate 5 relative to the build material application element 7, 7a, 7b (and vice versa). In the calibrating mode, the detection of a motion of the build plate 5 or the build material application element 7, 7a, 7b, respectively into the measurement plane MP trigger a detection of the position of the build plate 5 and the build material application element 7, 7a, 7b by means of respective motion and/or position determination device 12, 14, e.g. a motion and/or position encoder, associated with the build plate 5 or the build material application element 7, 7a, 7b, respectively so that the exact position of the build plate 5 or the build material application element 7, 7a, 7b, respectively when the build plate 5 or the build material application element 7, 7a, 7b, respectively is moved into the measurement plane MP (see Fig. 4, 5, Fig. 6 - 9) can be determined. The determined position of the build plate 5 or the build material application element 7, 7a, 7b, respectively when the build plate 5 or the build material application element 7, 7a, 7b, respectively is moved into the measurement plane MP can be (temporarily) stored in the data storage device and used for adjusting and determining, respectively the orientation and/or position of the build plate 5 relative to the build material application element 7, 7a, 7b (and vice versa), i.e. for calibrating purposes of the build plate 5 or the build material application element 7, 7a, 7b, respectively.

As will be exemplarily explained in context with the exemplary embodiments of Fig. 2 - 9, the control device 15 can be adapted to implement a calibrating mode for automatically calibrating a reference position, in particular a zero position, of the build plate 5 and/or the build material application elements 7a, 7b. The same applies to the exemplary embodiment of Fig. 1, i.e. the case of only one build material application element 7, 7a, 7b. The calibrating mode comprises performing a specific order of motion of the build plate 5 and the build material application elements 7a, 7b relative to the measurement plane MP, whereby the reference position of the build plate 5 and the build material application elements 7a, 7b is determined as the position of the build plate 5 or the build material application elements 7a, 7b, respectively at which the build plate 5 or the build material application elements 7a, 7b respectively is/are moved into the measurement plane MP, particularly relative to an initial position, so that a measurement beam 18a, 18b may be reflected at the build plate 5 or the build material application elements 7a, 7b, for instance (see Fig. 4, 5 showing the exemplary case that the measurement beams 18a, 18b are reflected at the build plate 5 which was moved into the measurement plane MP; Fig. 6, 7, 7a, 7b showing the exemplary case that the measurement beams 18a, 18b are reflected at the left build material application element 7a which was moved into the measurement plane MP; and Fig. 8, 9 showing the exemplary case that the measurement beams 18a, 18b are reflected at the right build material application element 7b which was moved into the measurement plane MP).

A respective calibrating mode may implement the following exemplary order of motion of the build plate 5 and the build material application element(s) 7, 7a, 7b, respectively:
Emanating from a defined initial position given in Fig. 2, 3, i.e. a position below the measurement plane MP, the build plate 5 may be moved towards the measurement plane MP. Once it is detected that the build plate 5 is moved into the measurement plane (see Fig. 4, 5), which detection may be based on detected reflections of at least one of the measurement beams 18a, 18b at the build plate 5, for instance (likewise, the detection of an interrupt of reception of the measurement beam 18, 18a, 18b by a measurement beam receiving unit could be the trigger), the position of the build plate 5, particularly relative to the initial position, may be determined. This determined position can be defined as a reference position, in particular a zero position, of the build plate 5 and stored in a data storage unit. If as is the case in the exemplary embodiments of Fig. 2 - 9 two or more measurement beams 18a, 18b are provided, the process may be performed with each measurement beam 18a, 18b separately.

Next, also emanating from a defined initial position given in Fig. 4, 5, i.e. a position above the measurement plane MP, a first build material application element 7a, e.g. the left build material application element 7a in Fig. 2 - 9, may be moved towards the measurement plane MP. Once it is detected that the build material application element 7a is moved into the measurement plane MP (see Fig. 6, 7, 7a, 7b), which detection may be based on detected reflections of a measurement beam 18 at the build material application element 7a, for instance (likewise, the detection of an interrupt of reception of the measurement beam 18, 18a, 18b by a measurement beam receiving unit could be the trigger), the position of the build material application element 7a, particularly relative to the initial position, may be determined. This determined position can be defined as a reference position, in particular a zero position, of the build material application element 7a and stored in a data storage unit. If as is the case in the exemplary embodiments of Fig. 2 - 9 two or more measurement beams 18a, 18b are provided, the process may be performed with each measurement beam 18a, 18b separately.

Next, also emanating from a defined initial position given in Fig. 4, 5, i.e. a position above the measurement plane MP, a second build material application element 7b, e.g. the right build material application element 7b in Fig. 2 - 9, may be moved towards the measurement plane MP. Once it is detected that the build material application element 7b is moved into the measurement plane MP (see Fig. 8, 9), which detection may be based on detected reflections of a measurement beam 18 at the build material application element 7b, for instance (likewise, the detection of an interrupt of reception of the measurement beam 18, 18a, 18b by a measurement beam receiving unit could be the trigger) the position of the build material application element 7b, particularly relative to the initial position, may be determined. This determined position can be defined as a reference position, in particular a zero position, of the build material application element 7b and stored in a data storage unit. If as is the case in the exemplary embodiments of Fig. 2 - 9 two or more measurement beams 18a, 18b are provided, the process may be performed with each measurement beam 18a, 18b separately.

Of course, the order or motion(s) of the build plate 5 and the build material application elements 7a, 7b may be changed in arbitrary manner.

Fig. 2 - 9 also shows an optional guiding device 23 comprising a number of guiding elements 23a, 23b, e.g. guiding rails, being adapted to guide the build material application elements 7a, 7b while moving in the respective degree of freedom of motion.

As is clear from the exemplary embodiments given in the Fig. a method for optically determining a reference position, in particular a zero position, of a build plate 5, the build plate 5 being moveably supported in at least one degree of freedom of motion, and/or at least one build material application element 7, 7a, 7b, the build material application element 7, 7a, 7b being moveably supported in at least one degree of freedom of motion, of an apparatus 1 for additively manufacturing three-dimensional objects 2 can be implemented. The method may also be deemed as a method for calibrating the position of a build plate 5 and/or build material application element 7, 7a, 7b, respectively.

The method may comprise performing a specific order of motion of the build plate 5 and/or build material application element 7, 7a, 7b relative to a measurement plane MP, whereby the reference position of the build plate 5 and/or the build material application element 7, 7a, 7b is determined/defined as the position of the build plate 5 or the build material application element 7, 7a, 7b, respectively at which the build plate 5 or the build material application element 7, 7a, 7b, respectively is moved into the measurement plane MP, particularly relative to an initial position, so that a measurement beam 18, 18a, 18b may be reflected at the build plate 5 or the build material application element 7, 7a, 7b, respectively.

## Claims

1. Apparatus (1) for additively manufacturing of three-dimensional objects (2) by means of successive layerwise selective irradiation and consolidation of layers of build material (3) which can be consolidated by means of an energy beam (4), the apparatus (1) comprising:
- at least one build plate (5), the build plate (5) being moveably supported in at least one degree of freedom of motion; and/or
- at least one build material application element (7, 7a, 7b), particularly a coating element, the build material application element (7, 7a, 7b) being moveably supported;
- at least one optical device (16), the optical device (16) being adapted to optically determine the orientation and/or position of the build plate (5) and/or the build material application element (7, 7a, 7b) relative to a reference plane (RP).

2. Apparatus according to Claim 1, wherein the optical device (16) is adapted to emit at least one measurement beam (18, 18a, 18b), the measurement beam (18, 18a, 18b) at least partly extending through a process chamber (17) of the apparatus (1), thereby defining a measurement plane (MP).

3. Apparatus according to Claim 2, wherein the optical device (16) comprises at least one measurement beam emitting unit (19) adapted to emit the at least one measurement beam (18, 18a, 18b).

4. Apparatus according to Claim 2 or 3, wherein the optical device (16) is adapted to emit at least two measurement beams (18, 18a, 18b), the measurement beams (18, 18a, 18b) at least partly extending through a process chamber (17) of the apparatus (1), thereby defining a measurement plane (MP).

5. Apparatus according to Claim 4, wherein the optical device (16) comprises at least one measurement beam emitting unit (19) adapted to emit the at least two measurement beams (18, 18a, 18b) or at least two measurement beam emitting units (19) each adapted to emit at least one measurement beam (18, 18a, 18b).

6. Apparatus according to any of Claims 2 - 5, wherein the measurement plane (MP) has an angled or parallel arrangement relative to the build plane (BP) of the apparatus (1).

7. Apparatus according to any of Claims 2 - 6, wherein the measurement plane (MP) has a defined distance (d) relative to the or at least one further reference plane (RP), in particular the build plane (BP) of the apparatus (1).

8. Apparatus according to any of Claims 2 - 7, wherein the optical device (16) comprises at least one measurement beam receiving unit (20) adapted to receive at least one measurement beam (18, 18a, 18b) emitted from at least one measurement beam emitting unit (19) or the optical device (16) comprises at least one measurement beam reflecting unit (20) adapted to reflect at least one measurement beam (18, 18a, 18b) emitted from at least one measurement beam emitting unit (19) back towards the measurement beam emitting unit (19).

9. Apparatus according to any of Claims 2 - 8, wherein the optical device (16) comprises a measurement beam detecting unit (21) adapted to detect a measurement beam (18, 18a, 18b) received by the measurement beam receiving unit (20) and/or adapted to detect a measurement beam (18, 18a, 18b) being reflected back towards the measurement beam emitting unit (19).

10. Apparatus according to any of Claims 2 - 9, wherein the optical device (16) comprises at least one measurement beam travel time determining unit (22) adapted to determine the time interval a measurement beam (18, 18a, 18b) has travelled between the point of time at which it was emitted by the measurement beam emitting unit (19) and the point of time the measurement beam (18, 18a, 18b) is detected by the reflected measurement beam detecting unit (21).

11. Apparatus according to any of Claims 2 - 10, further comprising a control device (15) adapted to control motions of the build plate (5) and/or the build material application element (7, 7a, 7b) relative to the measurement plane (MP).

12. Apparatus according to Claim 11, wherein the control device (15) is adapted to implement a calibrating mode for, in particular automatically, determining a reference position, in particular a zero position, of the build plate (5) and/or the build material application element (7, 7a, 7b), whereby the calibrating mode comprises a specific order of motion of the build plate (5) and/or the build material application element (7, 7a, 7b) relative to the measurement plane (MP), whereby the reference position of the build plate (5) and/or the build material application element (7, 7a, 7b) is determined as the position of the build plate (5) or the build material application element (7, 7a, 7b), respectively at which the build plate (5) or the build material application element (7, 7a, 7b), respectively is moved into the measurement plane (MP), particularly relative to an initial position, so that a measurement beam (18, 18a, 18b) may be reflected at the build plate (5) or the build material application element (7, 7a, 7b), respectively.

13. Optical device (16) for an apparatus (1) for additively manufacturing three-dimensional objects (2), the optical device (16) being adapted to optically detect the orientation and/or position of the build plate (5) and/or the build material application element (7, 7a, 7b) relative to a reference plane (RP).

14. Method for optically determining a reference position, in particular a zero position, of at least one build plate (5), the build plate (5) being moveably supported in at least one degree of freedom of motion, and/or at least one build material application element (7, 7a, 7b), the build material application element (7, 7a, 7b) being moveably supported in at least one degree of freedom of motion, of an apparatus (1) for additively manufacturing three-dimensional objects (2), by means of an optical device (16) according to Claim 13.

15. Method according to Claim 14, wherein a specific order of motion of the build plate (5) and/or build material application element (7, 7a, 7b) relative to a measurement plane (MP) is performed, whereby the reference position of the build plate (5) and/or the build material application element (7, 7a, 7b) is determined as the position of the build plate (5) or the build material application element (7, 7a, 7b), respectively at which the build plate (5) or the build material application element (7, 7a, 7b), respectively is moved into the measurement plane (MP), particularly relative to an initial position, so that a measurement beam (18, 18a, 18b) may be reflected at the build plate (5) or the build material application element (7, 7a, 7b), respectively.
